# DEMANDE DE BREVET EUROPEEN

(11) **EP 4 011 670 A1**
(43) Date de publication de la demande: **15.06.2022**
(21) Numéro de dépôt: 21211421.9
(22) Date de dépôt: 30.11.2021
(51) Int. Cl.: B60K 6/387, B60K 6/48, B60K 6/547, B60K 6/405

(54) **MODULE HYBRIDE**

(30) Priorité: 09.12.2020 FR 2012907
(71) Demandeur: Valeo Embrayages, 95892 Cergy Pontoise (FR)
(72) Inventeur: LHEUREUX, Dominique, 80009 Amiens (FR); VASSIEUX, Loic, 80009 Amiens (FR)
(74) Mandataire: Valeo Powertrain Systems

(57) **Abrégé**

Un sous-ensemble hybride (10) d'entraînement d'un véhicule, comporte des roues dentées primaires (38, 40) des roues dentées secondaires (42, 44, 46) aptes être accouplées à un arbre secondaire (16), un arbre intermédiaire (26) auquel sont solidarisées en rotation des roues dentées intermédiaires (28, 30, 32, 34, 36), la ou les roues dentées primaires (38, 40) et les roues dentées secondaires (42, 44, 46) engrenant chacune de façon permanente avec une roue dentée correspondante parmi les roues dentées intermédiaires (28, 30, 32, 34, 36). Ce sous-ensemble hybride (10) est équipé d'un module motorisé (5) comportant une machine électrique réversible (56), une interface de liaison à l'arbre intermédiaire (26), un réducteur de vitesse (62), un organe de prise de force (65) et un mécanisme à double embrayage (58) apte à accoupler et à désaccoupler de l'organe de prise de force (65) de la machine électrique réversible (56) et de l'arbre intermédiaire (26).

## Description

### DOMAINE TECHNIQUE DE L'INVENTION

L'invention se rapporte à un sous-ensemble hybride d'entraînement destiné à être positionné entre un moteur, par exemple un moteur thermique, et un ensemble d'une ou plusieurs roues motrices d'un véhicule. Elle se rapporte en particulier, bien que de façon non exclusive, à un tel sous-ensemble destiné à équiper un poids lourd, c'est-à-dire un véhicule routier de plus de 3,5 tonnes, notamment un tracteur routier, ou un porteur. L'invention se rapporte également à un module motorisé apte à être intégré au sein du sous-ensemble hybride d'entrainement.

### ETAT DE LA TECHNIQUE ANTERIEURE

Dans le document WO2011/072986A1 est décrit un sous-ensemble hybride d'entraînement d'un véhicule, comportant un arbre primaire destiné à être entraîné par un moteur thermique du véhicule, un arbre secondaire destiné à entraîner un ensemble d'une ou plusieurs roues motrices du véhicule, et une boîte de transmission comportant une ou plusieurs roues dentées primaires solidaires en rotation de l'arbre primaire ou aptes à être accouplées à l'arbre primaire, une pluralité de roues dentées secondaires solidaires en rotation de l'arbre secondaire ou aptes être accouplées à l'arbre secondaire, et deux arbres intermédiaires auxquels sont solidarisées en rotation des roues dentées intermédiaires, la ou les roues dentées primaires et les roues dentées secondaires engrenant chacune avec une roue dentée correspondante parmi les roues dentées intermédiaires. Le sous-ensemble hybride d'entraînement comporte en outre une machine électrique réversible liée cinématiquement aux arbres intermédiaires via un étage amont de démultiplication et un mécanisme d'accouplement à crabot, ladite machine électrique étant apte à fonctionner en générateur de courant pour freiner les arbres intermédiaires ou en moteur d'entraînement des arbres intermédiaires. Une telle machine électrique permet d'envisager différents modes de fonctionnement, et notamment un fonctionnement transitoire de la machine électrique pour freiner ou accélérer les arbres intermédiaires et favoriser la synchronisation de la boîte de transmission dans les phases de changement de rapport de transmission, un fonctionnement moteur pour assister l'entraînement du moteur principal du véhicule hors des phases de changement de rapport et un fonctionnement de générateur électrique, pour l'alimentation électrique d'accessoires du véhicule ou d'une batterie, notamment dans des phases de freinage du véhicule. Dans ce sous-ensemble hybride d'entraînement, la machine électrique réversible est disposée en ligne par rapport au moteur thermique, c'est-à-dire que le rotor de la machine électrique est concentrique à la sortie du moteur thermique.

Dans le dispositif décrit dans le document WO2011/072986A1, un organe de prise de force mécanique appelé « PTO » peut être entraîné uniquement par la machine électrique réversible du sous-ensemble hybride d'entraînement. À cette fin, la boîte de transmission prend une position neutre, où, pendant l'arrêt du véhicule, l'embrayage de couplage du moteur thermique avec l'arbre primaire est également désengagé. L'utilisation de l'organe de prise de force se fait uniquement par l'intermédiaire de la machine électrique réversible limitant ainsi les capacités de son utilisation.

### EXPOSE DE L'INVENTION

L'invention vise à remédier aux inconvénients de l'état de la technique et à proposer une meilleure intégration d'une machine électrique au sein d'un sous-ensemble hybride d'entrainement lorsqu'elle est accouplée à un organe de prise de force et à un arbre intermédiaire de boîte de transmission.

Pour ce faire est proposé, selon un premier aspect de l'invention, un module motorisé pour entraîner et ralentir un arbre intermédiaire d'un sous-ensemble hybride comportant plusieurs roues dentées primaires destinées à être entraînées par un moteur principal du véhicule, un arbre secondaire destiné à entraîner un ensemble d'une ou plusieurs roues motrices du véhicule, plusieurs roues dentées secondaires aptes être accouplées à l'arbre secondaire, et des roues dentées intermédiaires solidarisées en rotation à l'arbre intermédiaire, la ou les roues dentées primaires et les roues dentées secondaires engrenant chacune de façon permanente avec une roue dentée correspondante parmi les roues dentées intermédiaires, le module motorisé comportant au moins une machine électrique réversible apte à entraîner et ralentir l'arbre intermédiaire, une interface de liaison apte à être liée cinématiquement en rotation à l'arbre intermédiaire, caractérisé en ce que le module motorisé comprend un mécanisme à double embrayage comportant :
- un boitier de transmission de couple lié cinématiquement à l'interface de liaison ;
- un premier embrayage multidisques apte à passer d'un état d'accouplement pour accoupler le boitier de transmission de couple avec un premier organe d'accouplement à un état de désaccouplement pour désaccoupler le boitier de transmission de couple du premier organe d'accouplement, le premier organe d'accouplement étant lié cinématiquement à un organe de prise de force ;
- un deuxième embrayage multidisques apte à passer d'un état d'accouplement pour accoupler le boitier de transmission de couple avec un deuxième organe d'accouplement à un état de désaccouplement pour désaccoupler le boitier de transmission de couple du deuxième organe d'accouplement, le deuxième organe d'accouplement étant lié cinématiquement à la machine électrique réversible ;
ledit module motorisé comprenant un réducteur de vitesse disposé cinématiquement entre la machine électrique réversible et le deuxième organe d'accouplement.

L'utilisation d'un premier embrayage multidisques permet l'accouplement de l'organe de prise de force à l'arbre intermédiaire lorsque le véhicule est en mouvement. Contrairement à un mécanisme à crabot, il n'est pas nécessaire de synchroniser la vitesse de rotation des deux éléments tournants tels que l'organe de prise de force et l'arbre intermédiaire.

L'implantation d'un mécanisme à double embrayage entre la machine électrique réversible, l'organe de prise de force et l'arbre intermédiaire permet d'obtenir un module motorisé compact axialement. Le module motorisé peut facilement être adapté sur une boite de transmission conventionnelle afin de la transformer en sous-ensemble hybride à moindre cout.

L'interposition d'un mécanisme à double embrayage entre la machine électrique réversible, l'organe de prise de force et l'arbre intermédiaire permet d'envisager un fonctionnement transitoire de la machine électrique pour freiner ou accélérer les arbres intermédiaires et favoriser la synchronisation de la boîte de transmission dans les phases de changement de rapport de transmission, un fonctionnement moteur pour assister l'entraînement du moteur principal du véhicule hors des phases de changement de rapport et un fonctionnement de générateur électrique, pour l'alimentation électrique d'accessoires du véhicule ou d'une batterie, notamment dans des phases de freinage du véhicule.

La machine électrique réversible peut être désaccouplée par simple actionnement du premier embrayage multidisques lorsqu'elle n'est pas nécessaire au fonctionnement de la boîte de transmission. Avantage complémentaire, le découplage de la machine électrique permet de soulager les paliers de guidage du rotor de la machine électrique, ce qui augmente leur durée de vie.

Lorsque les deux embrayages multidisques sont simultanément dans un état d'accouplement, il est possible d'utiliser l'organe de prise de force uniquement par l'intermédiaire de la machine électrique réversible.

Avantageusement, le module motorisé peut comprendre un troisième embrayage multidisques apte à passer d'un état d'accouplement pour accoupler le boitier de transmission de couple avec l'interface de liaison à un état de désaccouplement pour désaccoupler le boitier de transmission de couple de l'interface de liaison, le troisième embrayage multidisques étant disposé axialement à côté du mécanisme à double embrayage.

La machine électrique réversible peut notamment être une machine synchrone à aimants permanents, une machine asynchrone, une machine électrique à réluctance variable ou une machine électrique synchrone à réluctance variable, dite synchro-réluctance.

La machine électrique réversible peut avoir un axe de rotation parallèle à un axe de rotation de l'interface de liaison, de préférence distant de l'axe de rotation de l'interface de liaison.

L'interface de liaison peut être par exemple un tronçon d'arbre cannelé ou un manchon cannelé. Il peut également s'agir d'une platine circulaire avec des trous de passage de vis de fixation (l'arbre intermédiaire comprenant une face d'appui munie de perçage-taraudage), ou d'un arbre muni d'une clavette.

Le réducteur de vitesse peut avantageusement être du type réducteur à train épicycloïdal ou du type réducteur à arbres parallèles ou du type réducteur à courroie. De cette manière, le réducteur de vitesse permet d'adapter la vitesse de rotation de la machine électrique au besoin du sous-ensemble hybride.

De préférence, le module motorisé peut comporter un carter de module pour le logement du réducteur de vitesse et du mécanisme à double embrayage, la machine électrique réversible étant soit logée dans le carter, soit fixée au carter. Le boitier de transmission de couple peut être mobile en rotation par rapport au carter de module selon l'axe de rotation du mécanisme à double embrayage.

De préférence, le premier embrayage multidisques et le deuxième embrayage multidisques sont concentriques.

Le boitier de transmission de couple peut comprendre des surfaces de réception de disques de friction sur lequel les ensembles multidisques du premier embrayage et du deuxième embrayage sont engrenés à l'aide de cannelures.

Selon une variante, le premier embrayage multidisques et le deuxième embrayage multidisques fonctionnent dans l'huile. Le boitier de transmission de couple peut comprendre des orifices de passage d'huile de refroidissement. La capacité d'échange thermique des embrayages multidisques est améliorée. Selon cette variante, le carter de module peut être agencé pour collecter l'huile de refroidissement après le passage de l'huile au sein des embrayages multidisques.

Selon une autre variante, le premier embrayage multidisques et le deuxième embrayage multidisques fonctionnent à sec.

Suivant un mode de réalisation, le mécanisme à double embrayage peut être d'une architecture de type radiale dans laquelle les premier et deuxième embrayages multidisques sont disposés radialement l'un au-dessus de l'autre, le boitier de transmission de couple étant commun aux premier et deuxième embrayages multidisques. Cette architecture présente l'avantage d'être compacte axialement.

De préférence, l'axe de rotation du mécanisme à double embrayage peut être concentrique à l'axe de l'organe de prise de force et/ou concentrique à l'axe de la machine électrique réversible.

Avantageusement, l'axe de l'organe de prise de force peut passer au travers du rotor de la machine électrique réversible.

Suivant un autre mode de réalisation, le mécanisme à double embrayage peut être d'une architecture de type axiale dans laquelle les premier et deuxième embrayages multidisques sont disposés axialement l'un à côté de l'autre, le boitier de transmission de couple étant commun aux premier et deuxième embrayages multidisques.

De préférence, un train d'engrenages peut être disposé cinématiquement entre le premier organe d'accouplement et l'organe de prise de force, l'organe de prise de force ayant un axe de rotation parallèle à l'axe de rotation du mécanisme à double embrayage, de préférence distant de l'axe de rotation du mécanisme à double embrayage.

Suivant un autre aspect de l'invention, celle-ci a trait à un sous-ensemble hybride d'entraînement d'un véhicule, comportant :
- plusieurs roues dentées primaires destinées à être entraînées par un moteur principal du véhicule,
- un arbre secondaire destiné à entraîner un ensemble d'une ou plusieurs roues motrices du véhicule,
- plusieurs roues dentées secondaires aptes être accouplées à l'arbre secondaire,
- un arbre intermédiaire auquel sont solidarisées en rotation des roues dentées intermédiaires, la ou les roues dentées primaires et les roues dentées secondaires engrenant chacune de façon permanente avec une roue dentée correspondante parmi les roues dentées intermédiaires,
- au moins un module motorisé reprenant tout ou partie des caractéristiques mentionnées précédemment, l'interface de liaison du module motorisé étant solidaire en rotation de l'arbre intermédiaire.

De préférence, le sous-ensemble hybride comporte un carter de transmission délimitant une cavité de logement des roues dentées primaires, des roues dentées secondaires et des roues dentées intermédiaires, la machine électrique réversible étant disposée à l'extérieur de la cavité de logement. De préférence, le mécanisme à double embrayage est situé à l'extérieur de la cavité de logement. Dans cette hypothèse, le module motorisé comporte de préférence un carter de module comme décrit plus haut, qui est de préférence fixe au carter de transmission.

Avantageusement, la machine électrique réversible a un axe de rotation parallèle à un axe de rotation de l'arbre intermédiaire, une ou plusieurs des caractéristiques suivantes étant réalisées :
- l'axe de rotation de la machine électrique réversible est distant de l'axe de rotation de l'arbre intermédiaire ;
- l'axe de rotation de la machine électrique réversible est distant d'un axe de rotation des roues dentées primaires ;
- l'axe de rotation de la machine électrique réversible est distant d'un axe de rotation de l'arbre secondaire.

Suivant un autre aspect de l'invention, celle-ci a trait à l'utilisation d'un module motorisé reprenant tout ou partie des caractéristiques mentionnées précédemment, ledit module motorisé comprenant un troisième embrayage multidisques apte à passer d'un état d'accouplement pour accoupler le boitier de transmission de couple avec l'interface de liaison à un état de désaccouplement pour désaccoupler le boitier de transmission de couple de l'interface de liaison, caractérisé en ce que les premier et deuxième embrayages multidisques sont simultanément dans un état d'accouplement et le troisième embrayage multidisques dans un état de désaccouplement, de sorte que la machine électrique réversible puisse entrainer l'organe de prise de force indépendamment de l'arbre intermédiaire. L'utilisation de ce module motorisé selon l'invention permet d'utiliser l'organe de prise de force dans un environnement où l'on souhaite éviter les émissions polluantes du moteur principal du véhicule.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.

### BREVE DESCRIPTION DES FIGURES

D'autres caractéristiques et avantages de l'invention ressortiront à la lecture de la description qui suit, en référence aux figures annexées.
[Fig. 1] La figure 1 illustre un sous-ensemble hybride d'entraînement d'un véhicule suivant un premier mode de réalisation.
[Fig. 2] La figure 2 illustre un sous-ensemble hybride d'entraînement d'un véhicule suivant un deuxième mode de réalisation.
[Fig. 3] La figure 3 illustre un sous-ensemble hybride d'entraînement d'un véhicule suivant un troisième mode de réalisation.
[Fig. 4] La figure 4 illustre un sous-ensemble hybride d'entraînement d'un véhicule suivant un quatrième mode de réalisation.
[Fig. 5] La figure 5 illustre un module motorisé apte à être intégré dans le sous-ensemble hybride d'entraînement d'un véhicule suivant le premier mode de réalisation.

Pour plus de clarté, les éléments identiques ou similaires sont repérés par des signes de référence identiques sur l'ensemble des figures.

### DESCRIPTION DÉTAILLÉE DE MODES DE REALISATION

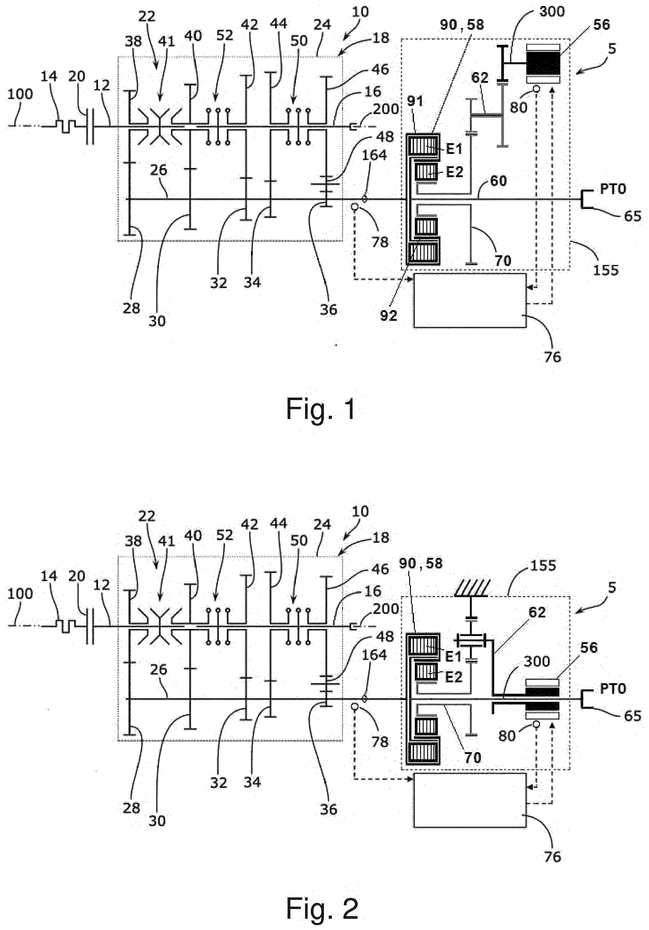

Sur la figure **1** est illustré un sous-ensemble hybride **10** d'entraînement d'un véhicule selon un premier mode de réalisation de l'invention, comportant un arbre primaire **12** destiné à être entraîné par un moteur principal **14** du véhicule, par exemple un moteur thermique, un arbre secondaire **16** destiné à entraîner un ensemble d'une ou plusieurs roues motrices du véhicule (non illustré), et une boîte de transmission **18.**

La liaison du moteur principal **14** à l'arbre primaire **12** peut inclure un embrayage **20** de tout type approprié, par exemple un embrayage à glissement. La liaison de l'arbre secondaire **16** aux roues du véhicule peut inclure un ou plusieurs ponts moteurs.

La boîte de transmission **18,** logée à l'intérieur d'une cavité **22** d'un carter de transmission **24,** comporte un arbre intermédiaire **26** auquel sont solidarisées en rotation des roues dentées intermédiaires **28, 30, 32, 34, 36.** Deux roues dentées primaires **38, 40** coaxiales avec l'arbre primaire **12,** forment chacune un train d'engrenages avec une roue dentée correspondante **28,** respectivement **30,** parmi les roues dentées intermédiaires. Les engrènements des trains d'engrenages **38, 28** et **40, 30** entre roues dentées primaires **38, 40** et les roues dentées intermédiaires correspondantes **28, 30** sont permanents. Un double synchroniseur **41** à trois positions permet d'accoupler l'une ou l'autre des roues dentées primaires **38, 40** à l'arbre primaire **12,** et offre une position neutre dans laquelle aucune des roues dentées primaires **38, 40** n'est accouplée à l'arbre primaire **12.**

Des roues dentées secondaires **42, 44, 46,** coaxiales avec l'arbre secondaire **16,** forment également chacune un train d'engrenages avec une roue dentée correspondante **32, 34, 36,** respectivement, parmi les roues dentées intermédiaires, l'un des trains d'engrenage étant inverseur et comportant une roue intermédiaire **48** pour réaliser un rapport de marche arrière. Les engrènements des trains d'engrenages formés par les roues dentées secondaires **42, 44, 46** et les roues dentées intermédiaires correspondantes **32, 34, 36** sont permanents. Un accouplement à crabot à trois positions sans synchroniseurs **50,** positionné entre deux des roues dentées secondaires **44, 46,** permet soit d'accoupler à l'arbre secondaire **16** l'une ou l'autre des deux roues dentées secondaires associées **44, 46,** soit, dans une position neutre intermédiaire, de maintenir les roues dentées secondaires associées **44, 46** découplé de l'arbre secondaire **16.**

Dans ce mode de réalisation, l'axe de révolution **100** de l'arbre primaire **12** est aligné avec l'axe de révolution **200** de l'arbre secondaire **16,** ce qui permet d'utiliser la roue dentée primaire d'extrémité **40** alternativement comme roue dentée primaire, associée à l'arbre primaire **12** par le synchroniseur **41,** ou comme roue dentée secondaire associée à l'arbre secondaire **16.** À cet effet, un accouplement à crabot **52** à trois positions sans synchroniseurs, positionné entre la roue dentée primaire d'extrémité **40** et la roue dentée secondaire **42,** permet d'accoupler à l'arbre secondaire **16** soit la roue dentée primaire d'extrémité **40** soit la roue dentée secondaire **42,** et permet également, dans une position neutre intermédiaire, de maintenir la roue dentée primaire d'extrémité **40** et la roue dentée secondaire **42** découplées de l'arbre secondaire **16.**

On établit ainsi une boîte de transmission **18** à six rapports de marche avant et potentiellement deux rapports de marche arrière, que l'on peut le cas échéant coupler en sortie d'arbre secondaire **16** à un train épicycloïdal (non illustré) afin d'obtenir une boîte de vitesse à douze rapports. Cependant, ce nombre de rapport n'est pas limité.

De façon remarquable, le sous-ensemble hybride d'entraînement **10** est équipé d'un module motorisé **5** comportant un organe de prise de force **65** lié cinématiquement avec l'arbre intermédiaire **26** et une machine électrique réversible **56** d'entraînement et de ralentissement de l'arbre intermédiaire **26,** dont le rotor tourne autour d'un axe de rotation **300.**

Afin de synchroniser de manière progressive la machine électrique réversible **56** à l'organe de prise de force **65** et à l'arbre intermédiaire **26,** un mécanisme à double embrayage **58** est disposé à l'extrémité dudit arbre intermédiaire **26.** Ledit mécanisme à double embrayage **58** comporte notamment:
- un boitier de transmission de couple **90** lié cinématiquement à une interface de liaison **164** de l'arbre intermédiaire **26;**
- un premier embrayage multidisques **E1** apte à passer d'un état d'accouplement pour accoupler le boitier de transmission de couple **90** avec un premier organe d'accouplement **60** à un état de désaccouplement pour désaccoupler le boitier de transmission de couple du premier organe d'accouplement, le premier organe d'accouplement **60** étant lié cinématiquement à un organe de prise de force **65** que l'on pourra autrement dénommer « PTO »;
- un deuxième embrayage multidisques **E2** apte à passer d'un état d'accouplement pour accoupler le boitier de transmission de couple **90** avec un deuxième organe d'accouplement **70** à un état de désaccouplement pour désaccoupler le boitier de transmission de couple du deuxième organe d'accouplement, le deuxième organe d'accouplement **70** étant lié cinématiquement à la machine électrique réversible **56.**
L'utilisation d'embrayages multidisques à glissement permet de transmettre des couples importants et de synchroniser leurs ouvertures et fermetures sans prendre en compte l'état de fonctionnement du véhicule. A l'arrêt ou en mouvement, le conducteur du véhicule peut utiliser l'ensemble des fonctionnalités du module motorisé **5.**
Les embrayages multidisques **E1, E2** peuvent être du type fonctionnement à sec ou fonctionnement dans l'huile.

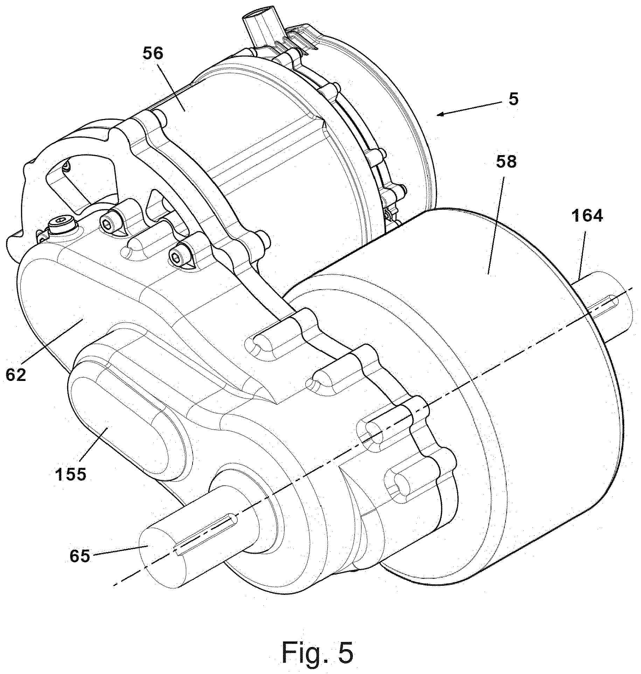

Le module motorisé **5** comprend également un réducteur de vitesse **62** disposé cinématiquement entre la machine électrique réversible **56** et le deuxième organe d'accouplement **70.** Dans l'exemple du premier mode de réalisation, le réducteur de vitesse **62** est du type réducteur à arbres parallèles. Certains au moins des éléments du module motorisé **5** peuvent être logés dans un carter de module **155,** notamment le mécanisme à double embrayage **58,** le train d'engrenages à réducteur de vitesse **62,** le cas échéant l'interface de liaison **164,** l'organe de prise de force **65** et la machine électrique réversible **56.** Cette dernière peut être alternativement, comme illustré sur la figure **5****,** disposée à l'extérieur du carter de module **155,** le cas échéant fixée au carter de module **155.**

Le mécanisme à double embrayage **58** est d'une architecture de type radiale dans laquelle les premier et deuxième embrayages multidisques **E1, E2** sont disposés radialement l'un au-dessus de l'autre. Plus précisément, dans cet exemple, le premier embrayage multidisques **E1** est disposé radialement autour du deuxième embrayage multidisques **E2.** Le boitier de transmission de couple **90** commun aux premier et deuxième embrayages multidisques **E1, E2** est guidé en rotation sur le carter de module **155** à l'aide de paliers de guidage.

Le boitier de transmission de couple **90** est relié en amont à l'arbre intermédiaire **26** par l'interface de liaison **164,** qui peut par exemple être constituée par un tronçon d'arbre cannelé ou un manchon cannelé.

Le boitier de transmission de couple **90** comprend des surfaces de réception des disques de friction sur lequel les ensembles multidisques du premier embrayage **E1** et du deuxième embrayage **E2** sont engrenés à l'aide de cannelures. Selon le premier mode de réalisation, le boitier de transmission de couple **90** comprend ainsi un porte-disques externe **91** pour la réception des disques de friction du premier ensemble multidisques et un porte-disques interne **92** pour la réception des disques de friction du deuxième ensemble multidisques. La structure du boitier de transmission de couple **90** peut être du type monobloc ou comprendre plusieurs composants assemblés rigidement entre eux de manière à transmettre efficacement le couple.

Le boitier de transmission de couple **90** est mobile en rotation par rapport au carter de module **155** selon l'axe de rotation du mécanisme à double embrayage **58.**

Le couple à la sortie du premier embrayage multidisques **E1** est repris par le premier organe d'accouplement **60.** Le premier organe d'accouplement **60** est un porte-disques de sortie de couple raccordé directement à l'organe de prise de force **65** dont l'axe de rotation est concentrique à l'axe de rotation du mécanisme à double embrayage **58.** L'organe de prise de force **65** peut être par exemple un arbre de transmission comprenant une interface externe de raccordement, par exemple une cannelure destinée à permettre un accouplement d'un ou plusieurs accessoires du véhicule, par exemple un treuil, une pompe ou un outil. L'axe de rotation de l'organe de prise de force **65** et celui de l'interface de liaison **164** sont de préférence alignés.

Le couple à la sortie du deuxième embrayage multidisques E2 est repris par le deuxième organe d'accouplement **70.** Le deuxième organe d'accouplement **70** est un porte-disques de sortie de couple lié cinématiquement à la machine électrique réversible **56.** Le deuxième organe d'accouplement **70** permet de raccorder la machine électrique réversible **56** à l'arbre intermédiaire **26** lorsque le deuxième embrayage multidisques **E2** est dans un état d'accouplement.

À titre d'illustration, on peut prévoir une machine électrique réversible **56** alimentée en 48 volts, avec un rapport de réduction entre la sortie du rotor de la machine électrique et le mécanisme à double embrayage **58** compris entre 4 et 6, suivant que l'on souhaite privilégier un couple élevé ou une vitesse de rotation élevée.

Selon une autre configuration, on peut prévoir une machine électrique réversible 56 alimentée par une tension élevée comprise entre 300 et 800V dans le cas où le véhicule serait entrainé exclusivement par ladite machine électrique réversible.

La figure **5** illustre un exemple de réalisation du module motorisé **5** réalisé sous une forme de module unitaire apte à être intégré au sein du sous-ensemble hybride **10** d'entraînement. Le module motorisé **5** comporte en outre un carter de module **155** de logement du réducteur de vitesse **62** et du mécanisme à double embrayage **58.** Dans cet exemple, la machine électrique réversible **56** est fixée au carter de module **155.** La machine électrique réversible **56** a un axe de rotation parallèle à l'axe de rotation de l'interface de liaison **164** et distant de l'axe de rotation de l'interface de liaison **164.** L'interface de liaison **164** est un arbre cylindrique muni d'une clavette.

Le module motorisé **5** est disposé de préférence à l'extérieur de la cavité principale **22** du carter de boîte de transmission **24,** ce qui permet de proposer ce sous-ensemble comme équipement optionnel sur une boîte de transmission conventionnelle. L'axe de rotation **300** de la machine électrique réversible **56** peut être parallèle aux axes de révolution **100, 200** de l'arbre primaire **12** et de l'arbre secondaire **16.**

Une unité de commande **76** permet de commander la machine électrique réversible **56** et le mécanisme à double embrayage **58.** À cette unité de commande sont connectés des capteurs **78, 80** pour mesurer la vitesse de rotation de l'arbre intermédiaire **26** et pour mesurer une vitesse de rotation caractéristique de la machine électrique réversible **56** qui peut être une vitesse de l'arbre de sortie de la machine réversible **56** ou une vitesse de rotation d'un élément du réducteur de vitesse associé **62.** Cette unité de commande **76** peut être intégrée à une commande robotisée de la boîte de transmission **18** qui commande l'ouverture et la fermeture des synchroniseurs **41**, des mécanismes à crabot **50, 52,** et le cas échéant de l'embrayage principal **20,** pour répondre à une consigne de couple ou de vitesse.

La machine électrique réversible **56** permet d'envisager plusieurs modes de fonctionnement.

Une première utilisation vise les phases transitoires de changement de rapport de vitesse de la boîte de transmission **18.** Durant ces phases transitoires, la machine électrique réversible **56** permet d'adapter la vitesse de rotation de l'arbre intermédiaire **26** aux besoins de synchronisation lors des commutations des mécanismes à crabot **50, 52** ou des synchroniseurs **41,** la machine électrique pouvant être utilisée alternativement comme moteur électrique pour augmenter la vitesse de rotation de l'arbre intermédiaire **26** ou comme frein électrodynamique pour diminuer cette vitesse. Cette adaptation de la vitesse de l'arbre intermédiaire **26** permet de réduire les temps de crabotage ou de synchronisation, sans avoir recours à un frein de boîte.

Hors des phases transitoires, lorsqu'un rapport de vitesse est engagé, la machine électrique réversible **56** peut être utilisée en générateur de courant, pour recharger une batterie du véhicule, ou pour moduler le ralentissement de la chaîne cinématique de transmission lorsque le moteur thermique principal **14** du véhicule entre dans un régime de frein moteur. Toujours lorsqu'un rapport de vitesse est engagé, la machine électrique réversible **56** alimentée par une batterie du véhicule peut être utilisée en moteur pour un apport de puissance supplémentaire pour la traction du véhicule.

Une utilisation de la machine électrique réversible **56** pour une traction purement électrique du véhicule peut également être envisagée en ouvrant l'embrayage **20** ou les synchroniseurs **41** pour découpler le moteur principal **14** ou l'arbre primaire **12,** tout en conservant l'un des mécanismes à crabots **50, 52** engagé.

Le mécanisme à double embrayage **58** est utilisé pour interrompre la liaison entre l'arbre intermédiaire **26** et la machine électrique réversible **56** lorsque cette dernière n'est pas utile, de manière à limiter le couple de traînée de la machine électrique **56** et à réduire la consommation de carburant. Ils permettent également d'envisager plusieurs modes de fonctionnement de l'organe de prise de force **65,** indépendamment de l'état du véhicule, à l'arrêt ou en mouvement.

En ouvrant le synchroniseurs **41,** les mécanismes à crabot **50, 52,** et le cas échéant de l'embrayage principal **20,** le sous-ensemble constitué par la machine électrique réversible **56,** son train d'engrenages à réducteur de vitesse **62** permet d'entraîner l'organe de prise de force **65** à l'aide de la machine électrique réversible **56** utilisée en moteur, indépendamment de la boîte de transmission **18** et du moteur principal **14** du véhicule. Seul l'arbre intermédiaire **26** est entrainé par la machine électrique réversible **56.** L'entraînement de l'organe de prise de force **65** par la machine électrique réversible **56** sans recours au moteur principal du véhicule permet d'atteindre des vitesses de rotation très nettement supérieures à 1000 tr/min, par exemple supérieures à 1500 tr/min, et le cas échéant jusqu'à 5000 tr/min.

Dans ce mode de fonctionnement, la machine électrique réversible **56** peut être alimentée à partir d'une source d'énergie fournie par des batteries du véhicule ou, dans l'hypothèse où le véhicule est à l'arrêt, d'une source d'énergie électrique externe à laquelle le véhicule est branché. Ce mode de fonctionnement trouvera une application notamment lorsque le moteur principal **14** est à l'arrêt, par exemple parce que l'on souhaite entraîner la prise de force **65** dans un environnement où l'on souhaite éviter les émissions polluantes du moteur principal du véhicule.

En fermant les deux embrayages multidisques **E1, E2** du mécanisme à double embrayage **58,** on peut utiliser le moteur principal **14** du véhicule, conjointement avec la machine électrique réversible **56,** pour entraîner l'organe de prise de force **65.**

Sur la figure **2** est illustré un deuxième mode de réalisation de l'invention, qui diffère du précédent par l'emplacement de la machine électrique réversibles **56** qui est disposée de manière concentrique au mécanisme à double embrayage **58** et à l'arbre intermédiaire **26.**

Dans ce deuxième mode de réalisation, le réducteur de vitesse **62** est du type réducteur à train épicycloïdal et comprend un arbre planétaire relié au deuxième organe d'accouplement **70** du deuxième embrayage multidisques **E2.**

Le carter de module **155** peut comprendre une couronne dentée sur laquelle engrènent les satellites du réducteur de vitesse **62** du type réducteur à train épicycloïdal.

Le fonctionnement de ce sous-ensemble hybride **10** d'entraînement est identique au premier mode de réalisation mais présente l'avantage d'offrir un module motorisé **5** compact radialement. Notamment, l'axe de l'organe de prise de force **65** passe au travers du rotor de la machine électrique réversible **56.**

Selon une autre configuration proche du deuxième mode de réalisation, on peut prévoir qu'un train d'engrenages **63** soit disposé cinématiquement entre le premier organe d'accouplement **60** et l'organe de prise de force **65,** l'axe de l'organe de prise de force **65** ayant un axe de rotation parallèle à un axe de rotation du mécanisme à double embrayage **58** mais distant de l'axe de rotation du mécanisme à double embrayage **58.** Dans cette configuration, le deuxième embrayage multidisques **E2** est disposé radialement autour du premier embrayage multidisques **E1.**

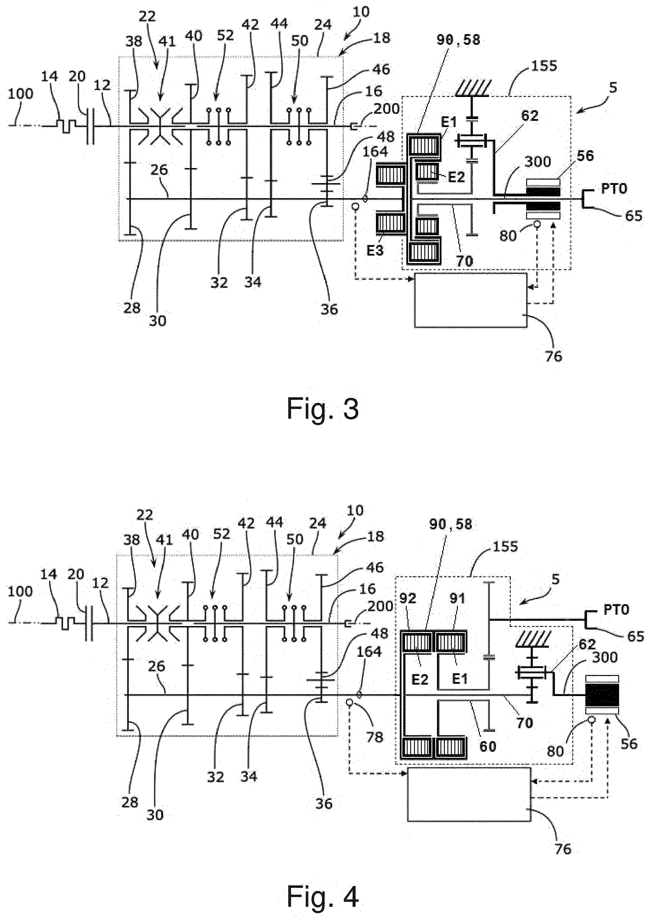

Sur la figure **3** est illustré un troisième mode de réalisation de l'invention, qui diffère du précédent par l'utilisation d'un troisième embrayage multidisques **E3** disposé axialement à côté du mécanisme à double embrayage **58.**

Dans ce troisième mode, le boitier de transmission de couple **90** est solidairement lié en rotation avec le porte-disques externe du troisième embrayage multidisques **E3.** Le porte-disques interne du troisième embrayage multidisques **E3** est raccordé directement avec l'interface de liaison **164.**

Le réducteur de vitesse **62** est du type réducteur à train épicycloïdal et comprend un arbre planétaire relié au deuxième organe d'accouplement **70** du deuxième embrayage multidisques **E2.** Grâce à cette architecture, l'axe de l'organe de prise de force **65** passe au travers du rotor de la machine électrique réversible **56.**

Le fonctionnement de ce sous-ensemble hybride d'entraînement **10** selon ce troisième mode de réalisation est comparable au premier mode de réalisation mais peut offrir des modes de fonctionnement différents grâce à ce troisième embrayage multidisques **E3.**

En ouvrant le troisième embrayage multidisques **E3,** on isole de l'arbre intermédiaire **26** le sous-ensemble constitué par la première machine électrique réversible **56,** son train d'engrenages à réducteur de vitesse **62** et l'organe de prise de force **65,** ce qui permet d'entraîner l'organe de prise de force **65** à l'aide de la machine électrique réversible **56** utilisée en moteur, indépendamment de la boîte de transmission **18** et du moteur principal **14** du véhicule Dans ce mode de fonctionnement, la machine électrique réversible **56** peut être alimentée à partir d'une source d'énergie fournie par des batteries du véhicule ou, dans l'hypothèse où le véhicule est à l'arrêt, d'une source d'énergie électrique externe à laquelle le véhicule est branché. Ce mode de fonctionnement trouvera une application notamment lorsque le moteur principal **14** est à l'arrêt, par exemple parce que l'on souhaite entraîner l'organe de prise de force **65** dans un environnement où l'on souhaite éviter les émissions polluantes du moteur principal du véhicule. Il pourra également trouver application alors que le moteur principal **14** tourne, mais que l'on souhaite entraîner la prise de force à une vitesse indépendante de la vitesse de l'arbre intermédiaire **26,** que le véhicule soit à l'arrêt ou en mouvement. On peut d'ailleurs envisager que le capteur **80** permette non seulement une mesure de vitesse, mais également une mesure d'un angle de rotation, relatif ou absolu, de sorte que l'on peut envisager d'entraîner l'organe de prise de force **65** suivant une consigne de déplacement angulaire ou de position angulaire.

Dans ce troisième mode de réalisation de l'invention, il est avantageux de prévoir une machine électrique réversible **56** alimentée par une tension élevée comprise entre 300 et 800V dans le cas où l'organe de prise de force **65** serait entrainé exclusivement en mode électrique et découplé de l'arbre intermédiaire **26** mais aussi dans le cas où le véhicule serait entrainé exclusivement par ladite machine électrique réversible **56.**

Sur la figure 4 est illustré un quatrième mode de réalisation de l'invention, qui diffère du deuxième mode de réalisation par l'utilisation d'un mécanisme à double embrayage **58** ayant une architecture axiale dans laquelle les premier et deuxième embrayages multidisques **E1, E2** sont disposés axialement l'un à côté de l'autre.

Dans ce quatrième mode de réalisation, le boitier de transmission de couple **90** reste commun aux premier et deuxième embrayages multidisques **E1, E2** et comprend des surfaces de réception des disques de friction sur lequel les ensembles multidisques du premier embrayage **E1** et du deuxième embrayage **E2** sont engrenés à l'aide de cannelures.

Le boitier de transmission de couple **90** comprend un porte-disques externe **91** pour la réception des disques de friction du premier ensemble multidisques et un porte-disques interne **92** pour la réception des disques de friction du deuxième ensemble multidisques. La structure du boitier de transmission de couple **90** peut être du type monobloc ou comprendre plusieurs composants assemblés rigidement entre eux de manière à transmettre efficacement le couple.

Le couple à la sortie du premier embrayage multidisques **E1** est repris par le premier organe d'accouplement **60.** Le premier organe d'accouplement **60** est un porte-disques de sortie de couple raccordé directement à un train d'engrenages **63** disposé cinématiquement entre le premier organe d'accouplement **60** et l'organe de prise de force **65.** Ainsi, l'axe de l'organe de prise de force **65** a un axe de rotation parallèle à un axe de rotation du mécanisme à double embrayage **58** mais distant de l'axe de rotation du mécanisme à double embrayage **58.** L'organe de prise de force **65** peut être par exemple un arbre de transmission comprenant une interface externe de raccordement, par exemple une cannelure destinée à permettre un accouplement d'un ou plusieurs accessoires du véhicule, par exemple un treuil, une pompe ou un outil.

Le couple à la sortie du deuxième embrayage multidisques **E2** est repris par le deuxième organe d'accouplement **70.** Le deuxième organe d'accouplement **70** permet de raccorder la machine électrique réversible **56** à l'arbre intermédiaire **26** lorsque le deuxième embrayage multidisques **E2** est dans un état d'accouplement. Un réducteur de vitesse **62** du type réducteur à train épicycloïdal est intercalé entre la machine électrique réversible **56** et le deuxième organe d'accouplement **70.**

Dans ce quatrième mode de réalisation, le réducteur de vitesse **62** comprend un arbre planétaire relié directement au deuxième organe d'accouplement **70** du deuxième embrayage multidisques **E2.**

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

A titre d'exemple, une deuxième machine électrique réversible associé à un réducteur de vitesse peut être installé dans tous les modes de réalisation. Le réducteur de vitesse **62** peut être remplacé par tout autre mécanisme réducteur, notamment un train épicycloïdal, ou un mécanisme réducteur à courroie ou à chaîne. Les organes d'entrée et de sortie du mécanisme réducteur peuvent être coaxiaux, parallèle ou suivant une autre orientation. L'axe de rotation du rotor de la première machine électrique peut être coaxial avec l'axe de rotation de l'arbre intermédiaire, ou parallèle et à distance de l'axe de rotation de l'arbre intermédiaire ou suivant une autre orientation. La ou les machines électriques réversibles sont de préférence positionnées en dehors du carter **24** de la boîte de transmission, mais les trains réducteurs peuvent être disposés à l'intérieur ou à l'extérieur de la cavité principale **22** du carter **24.**

La description qui a été ici faite de la boîte de transmission **18** est illustrative et n'a pas vocation à limiter la portée de l'enseignement de la présente demande, qui peut s'appliquer à d'autres configurations, avec un nombre plus ou moins grand de rapport, avec des accouplements à crabot ou à synchroniseurs. La boite de transmission peut comprendre par exemple un deuxième arbre intermédiaire.

## Revendications

1. Module motorisé (5) pour entraîner et ralentir un arbre intermédiaire d'un sous-ensemble hybride comportant plusieurs roues dentées primaires (38, 40) destinées à être entraînées par un moteur principal (14) du véhicule, un arbre secondaire (16) destiné à entraîner un ensemble d'une ou plusieurs roues motrices du véhicule, plusieurs roues dentées secondaires (42, 44, 46) aptes être accouplées à l'arbre secondaire (16), et des roues dentées intermédiaires (28, 30, 32, 34, 36) solidarisées en rotation à l'arbre intermédiaire (26), la ou les roues dentées primaires (38, 40) et les roues dentées secondaires (42, 44, 46) engrenant chacune de façon permanente avec une roue dentée correspondante parmi les roues dentées intermédiaires (28, 30, 32, 34, 36), le module motorisé comportant au moins une machine électrique réversible (56) apte à entraîner et ralentir l'arbre intermédiaire (26), une interface de liaison (164) apte à être liée cinématiquement en rotation à l'arbre intermédiaire (26), **caractérisé en ce que** le module motorisé comprend un mécanisme à double embrayage (58) comportant :
- un boitier de transmission de couple (90) lié cinématiquement à l'interface de liaison (164) ;
- un premier embrayage multidisques (E1) apte à passer d'un état d'accouplement pour accoupler le boitier de transmission de couple avec un premier organe d'accouplement (60) à un état de désaccouplement pour désaccoupler le boitier de transmission de couple du premier organe d'accouplement (60), le premier organe d'accouplement (60) étant lié cinématiquement à un organe de prise de force (65) ;
- un deuxième embrayage multidisques (E2) apte à passer d'un état d'accouplement pour accoupler le boitier de transmission de couple avec un deuxième organe d'accouplement (70) à un état de désaccouplement pour désaccoupler le boitier de transmission de couple du deuxième organe d'accouplement (70), le deuxième organe d'accouplement (70) étant lié cinématiquement à la machine électrique réversible (56) ;
ledit module motorisé comprenant un réducteur de vitesse (62) disposé cinématiquement entre la machine électrique réversible (56) et le deuxième organe d'accouplement (70).

2. Module motorisé (5) selon la revendication 1, **caractérisé en ce que** le réducteur de vitesse (62) est du type réducteur à train épicycloïdal ou du type réducteur à arbres parallèles ou du type réducteur à courroie.

3. Module motorisé (5) selon l'une des revendications 1 ou 2, **caractérisé en ce qu'**il comporte un carter de module (155) pour le logement du réducteur de vitesse (62) et du mécanisme à double embrayage (58), la machine électrique réversible (56) étant soit logée dans le carter, soit fixée au carter.

4. Module motorisé (5) selon l'une des revendications précédentes, **caractérisé en ce que** l'axe de rotation du mécanisme à double embrayage (58) est concentrique l'axe de l'organe de prise de force (65) et/ou à l'axe de la machine électrique réversible (56).

5. Module motorisé (5) selon l'une des revendications 1 à 4, **caractérisé en ce que** le mécanisme à double embrayage (58) est d'une architecture de type radiale dans laquelle les premier et deuxième embrayages multidisques (E1, E2) sont disposés radialement l'un au-dessus de l'autre, le boitier de transmission de couple (90) étant commun aux premier et deuxième embrayages multidisques.

6. Module motorisé (5) selon l'une des revendications 1 à 4, **caractérisé en ce que** le mécanisme à double embrayage (58) est d'une architecture de type axiale dans laquelle les premier et deuxième embrayages multidisques (E1, E2) sont disposés axialement l'un à côté de l'autre, le boitier de transmission de couple (90) étant commun aux premier et deuxième embrayages multidisques.

7. Module motorisé (5) selon l'une des revendications 1 à 6, **caractérisé en ce que** l'axe de l'organe de prise de force (65) passe au travers du rotor de la machine électrique réversible (56).

8. Module motorisé (5) selon l'une des revendications 1 à 6, **caractérisé en ce qu'**un train d'engrenages (63) est disposé cinématiquement entre le premier organe d'accouplement (60) et l'organe de prise de force (65), l'organe de prise de force (65) ayant un axe de rotation parallèle à l'axe de rotation du mécanisme à double embrayage (58), de préférence distant de l'axe de rotation du mécanisme à double embrayage (58).

9. Module motorisé (5) selon l'une des revendications précédentes, **caractérisé en ce qu'**il comprend un troisième embrayage multidisques (E3) apte à passer d'un état d'accouplement pour accoupler le boitier de transmission de couple (90) avec l'interface de liaison (164) à un état de désaccouplement pour désaccoupler le boitier de transmission de couple (90) de l'interface de liaison (164), le troisième embrayage multidisques (E3) étant disposé axialement à côté du mécanisme à double embrayage (58).

10. Module motorisé (5) selon l'une des revendications précédentes, **caractérisé en ce que** le premier embrayage multidisques (E1) et le deuxième embrayage multidisques (E2) fonctionnent dans l'huile, le boitier de transmission de couple (90) comprenant des orifices de passage d'huile de refroidissement.

11. Sous-ensemble hybride (10) d'entraînement d'un véhicule, comportant :
- plusieurs roues dentées primaires (38, 40) destinées à être entraînées par un moteur principal (14) du véhicule,
- un arbre secondaire (16) destiné à entraîner un ensemble d'une ou plusieurs roues motrices du véhicule,
- plusieurs roues dentées secondaires (42, 44, 46) aptes être accouplées à l'arbre secondaire (16),
- un arbre intermédiaire (26) auquel sont solidarisées en rotation des roues dentées intermédiaires (28, 30, 32, 34, 36), la ou les roues dentées primaires (38, 40) et les roues dentées secondaires (42, 44, 46) engrenant chacune de façon permanente avec une roue dentée correspondante parmi les roues dentées intermédiaires (28, 30, 32, 34, 36), et
**caractérisé en ce qu'**il comporte en outre au moins un module motorisé (5) selon l'une quelconque des revendications précédentes, l'interface de liaison (164) du module motorisé (5) étant solidaire en rotation de l'arbre intermédiaire (26).

12. Sous-ensemble hybride (10) selon la revendication précédente, **caractérisé en ce que** la machine électrique réversible (56) a un axe de rotation parallèle à un axe de rotation de l'arbre intermédiaire (26), une ou plusieurs des caractéristiques suivantes étant réalisées :
- l'axe de rotation de la machine électrique réversible (56) est distant de l'axe de rotation de l'arbre intermédiaire (26) ;
- l'axe de rotation de la machine électrique réversible (56) est distant d'un axe de rotation des roues dentées primaires (38, 40) ;
- l'axe de rotation de la machine électrique réversible (56) est distant d'un axe de rotation de l'arbre secondaire (16).

13. Sous-ensemble hybride (10) selon l'une des revendications 11 ou 12, **caractérisé en ce qu'**il comporte un carter de transmission (24) délimitant une cavité de logement (22) des roues dentées primaires (38, 40), des roues dentées secondaires (42, 44, 46) et des roues dentées intermédiaires (28, 30, 32, 34, 36), la machine électrique réversible (56) étant disposée à l'extérieur de la cavité de logement (22).

14. Utilisation d'un module motorisé (5) selon la revendication 9, **caractérisé en ce que** les premier et deuxième embrayages multidisques (E1, E2) sont simultanément dans un état d'accouplement et le troisième embrayage multidisques (E3) dans un état de désaccouplement, de sorte que la machine électrique réversible (56) puisse entrainer l'organe de prise de force (65) indépendamment de l'arbre intermédiaire (26).
